# EUROPEAN PATENT SPECIFICATION

(11) **EP 0 803 339 B1**
(45) Date of publication and mention of the grant of the patent: **11.07.2001**
(21) Application number: 97400946.6
(22) Date of filing: 25.04.1997
(51) Int. Cl.: B29C 45/26, B29C 33/42

(54) **Optical disc moulding device and moulding method for optical disc**
Giessvorrichtung und -verfahren für optische Platten
Dispositif de moulage pour disque optique et procédé de moulage pour disque optique

(30) Priority: 26.04.1996 JP 10772996; 15.05.1996 JP 14499096
(43) Date of publication of application: 29.10.1997
(73) Proprietor: SONY CORPORATION, Tokyo (JP); SONY DISC TECHNOLOGY INC., Yokohama, Kanagawa-ken (JP)
(72) Inventor: Arakawa, Nobuyuki, Shinagawa-ku, Tokyo (JP); Kashiwagi, Toshiyuki, Shinagawa-ku, Tokyo (JP); Kurosu, Asao, Shinagawa-ku, Tokyo (JP); Akiyama, Yuji, Shinagawa-ku, Tokyo (JP); Kishi, Shinsuke, Shinagawa-ku, Tokyo (JP)
(74) Representative: Thévenet, Jean-Bruno

(56) References cited:
- EP-A- 0 137 246
- EP-A- 0 220 725
- FR-A- 2 601 287
- PATENT ABSTRACTS OF JAPAN vol. 014, no. 092 (P-1009), 20 February 1990 & JP 01 300442 A (MATSUSHITA ELECTRIC IND CO LTD), 4 December 1989,

## Description

### BACKGROUND OF THE INVENTION

The present invention relates to an optical disc moulding device for injection moulding a laminated optical disc and a moulding method for an optical disc using this device.

The laminated optical disc is constituted as, for example, described below.

A data recording surface is formed on one surface of a translucent disc substrate made of, for example, polycarbonate or the like. This data recording surface is obtained by forming pits, representing data to be recorded, on one surface of the disc substrate by a stamper, and forming on top of the pits, by sputtering, an aluminum film as a reflective film.

The diameter and thickness of the disc substrate are set to 120 mm and about 0.6 mm respectively. Although it is desirable, from the viewpoint of obtaining higher density and the like, to make the thickness of the disc substrate thinner, it is necessary to set the thickness of the optical disc to 1.2 mm in view of the standardisation of optical disc devices.

Therefore, a translucent dummy substrate with a thickness of about 0.6 mm is stuck onto the data recording surface through a bonding layer. The reflective film on the data recording surface is protected by the disc substrate and the dummy substrate and, therefore, it is unlikely to be subjected to mechanical damage from the outside, and will give longer service.

A label indicating the content of the recording is printed on the surface of the dummy substrate.

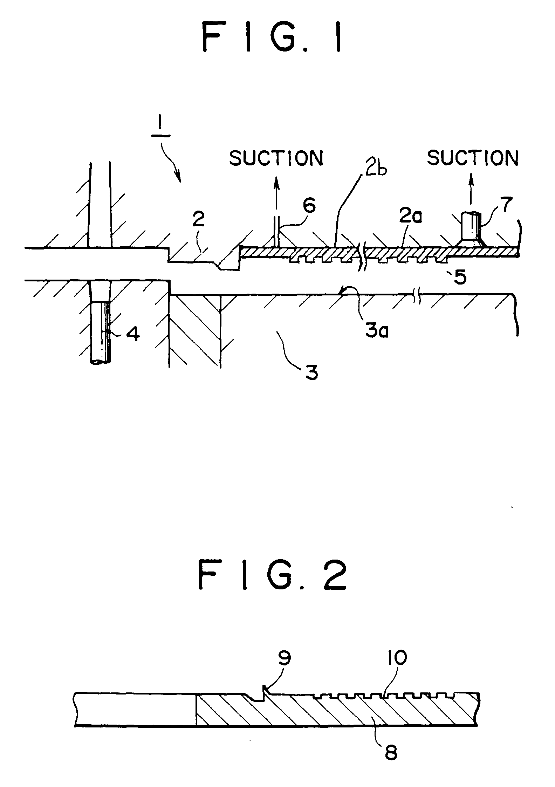

The laminated optical disc is moulded by an optical disc moulding device such as that shown in Fig. 1.

As shown in the figure, the optical disc moulding device 1 has a stationary mould 2 and a movable mould 3, and a disc substrate is injection moulded within the cavities 2a and 3a of these moulds. Molten resin such as polycarbonate is injected through an injection tube 4 provided at the central portion of the movable mould 3, and a stamper 5 for moulding the data recording surface is supported within the cavity 2a of the stationary mould 2.

The stamper 5 has an annular flat board shape, and is attracted by suction by ring-shaped suction member 6 and suction pipes 7 disposed at equal intervals in the peripheral direction to be supported in such a manner that the stamper 5 comes into contact with a stamper supporting surface 2b of the cavity 2a.

This stamper 5 is pressed against one surface of the disc substrate by the injection pressure, to form the data recording surface.

In a conventional optical disc moulding device 1, when the disc substrate 8 is released from the stamper 5 after injection moulding as shown in Fig. 2, a burr 9 occurs at the inner periphery of the disc substrate 8. The burr is caused by small gaps between the stamper 5 and the stationary mould 2. Since the burr 9 protrudes outwardly in the disc thickness direction from the data recording surface of the disc substrate 8, there is the problem that when the disc substrates are pasted together, their respective burrs come into contact with each other, deteriorating the flatness of the reference plane.

On the other hand, when an attempt to reduce this burr 9 is made, precise definition and alignment of the centre hole of the stamper 5 becomes necessary, and therefore, there is the problem that it becomes difficult to control the lip of the mould, thus deteriorating the operating efficiency, etc.

In addition, since post-machining and the like are required to remove the burr 9, there is the problem that the cost of production is increased, thus lowering the yield and the operating efficiency

An optical disc moulding device according to the preambles of claims 1 and 5 and a disc moulding method according to the preamble of claim 7 are known from EP-A-137246.

### SUMMARY OF THE INVENTION

The present invention has been achieved to solve the above-described problems, and its object is to provide an optical disc moulding device capable of preventing the flatness of the laminated reference plane from being deteriorated, rendering it easy to control the lip of moulds and avoiding the need for post-machining to remove a burr from the disc substrate. The invention also provides a moulding method for optical discs, using the optical disc moulding device.

According to a first embodiment of the present invention, the above-described object is achieved by an optical disc moulding device according to claim 1.

Also, according to a second embodiment of the present invention, the object is achieved by a moulding device according to claim 5.

Further, according to the present invention, the object is achieved by a moulding method for an optical disc according to claim 7.

According to the first embodiment of the present invention, the inner peripheral portion of the stamper-supporting surface within the cavity protrudes inwardly in the disc thickness direction from the data recording surface. The stamper supported by the stamper-supporting surface has been moulded into a shape in conformity with the stamper-supporting surface in advance, or is moulded into a shape in conformity with the stamper-supporting surface by means of the injection pressure during the disc moulding.

Accordingly, even if a burr may occur at the inner peripheral edge of the disc substrate by releasing the disc substrate from the stamper after the injection moulding, the flatness of the reference plane is not deteriorated because the data recording surface is moulded higher than this burr.

The above and other features and advantages of the present invention will become apparent from the following description of preferred embodiments thereof, given by way of example, and the accompanying drawings, in which:
Fig. 1 is a schematic view showing a conventional optical disc moulding device.
Fig. 2 is a schematic view showing a disc substrate moulded by the conventional optical disc moulding device.
Fig. 3 is a schematic view showing a first embodiment of an optical disc moulding device according to the present invention.
Fig. 4 is a schematic view showing basic portions of an optical disc moulding device according to this first embodiment.
Fig. 5 is a schematic view showing a moulded state of a disc substrate according to this first embodiment.
Fig. 6 is a schematic view showing a state in which disc substrates obtained using the device of this first embodiment are pasted together.
Fig. 7 is a view showing a stamper for use with an optical disc moulding device of a second embodiment.
Fig. 8 is a view showing a punching method using the stamper in another embodiment.
Fig. 9 is a view showing basic portions of an optical moulding device in another embodiment.

### DETAILED DESCRIPTION OF PREFERRED EMBODIMENTS

Now, hereinafter, preferred embodiments of the present invention will be described in detail in conjunction with the accompanying drawings.

In this respect, since the embodiments described below are preferred examples of the present invention, various technically preferred limitations are given, but the scope of the present invention is not limited to these embodiments, so long as there is no statement in the following description to the effect that the present invention is limited by a particular feature.

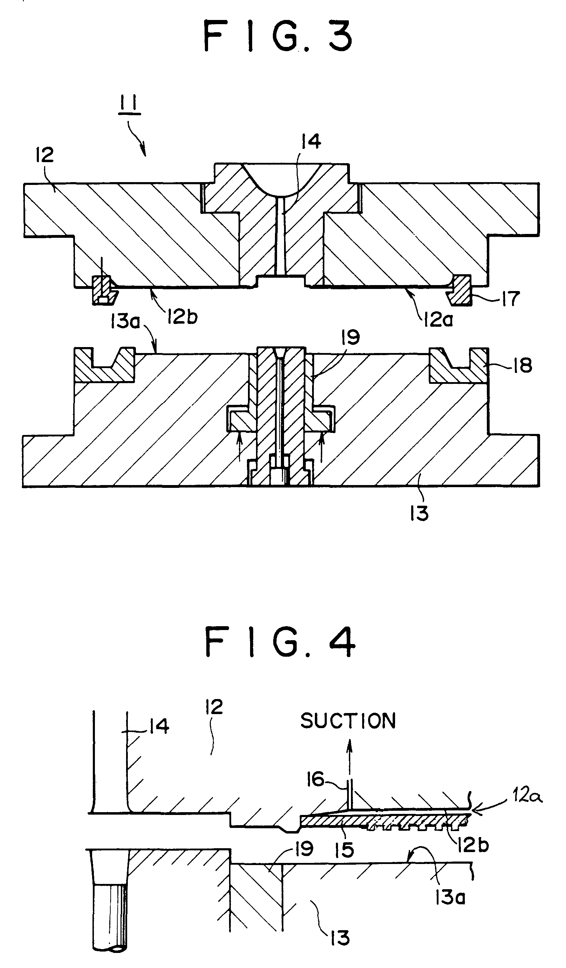

Fig. 3 is a schematic view showing a first embodiment of an optical disc moulding device according to the present invention.

As shown, an optical disc moulding device 11 according to this embodiment is composed of a pair of moulds 12 and 13 to injection mould a disc substrate within cavities 12a and 13a therein.

In this embodiment, the design is such that one mould 12 is a stationary mould and the other mould 13 is a movable mould; however, the invention is not limited to this configuration, both may be constituted as the movable mould.

At the central portion of the stationary mould 12, there is provided an injection tube 14 for injecting molten resin such as polycarbonate into space within cavities 12a and 13a combined.

On the other hand, within the cavity 12a of the stationary mould 12, there is supported a stamper 15 for moulding a data recording surface on one surface of the disc substrate.

The stamper 15 has an annular flat board form, on the surface of which a pit replica of the data recording surface has been formed. This stamper 15 is attracted by suction, from suction member 16, at a position near the round inner peripheral surface thereof, and its outer peripheral edge portion is held by a bearing pawl 17 mounted to the stationary mould 12, and is mounted to the stamper supporting surface 12b within the cavity 12a.

As shown in Fig. 4, the part of the stamper supporting surface 12b which corresponds to the inner periphery of the stamper 15 protrudes inwardly in the disc thickness direction from the data recording surface.

In the movable mould 13, there is formed a bearing pawl receiver 18 for housing the bearing pawl 17 protruding from the stationary mould 12, so that the stationary mould 12 and the movable mould 13 are combined when the bearing pawl 17 is housed in the bearing pawl receiver 18.

In addition, at the central portion of the movable mould 13, there is provided a tubular extrusion member 19 used to take out the moulded disc substrate and arranged so as to freely advance or retreat when the movable mould 13 retreats, to release the mould.

As described above, the optical disc moulding device 11 is constituted, and a moulding method for an optical disc according to this embodiment of the present invention is performed using the optical disc moulding device 11.

More specifically, the moulding method for an optical disc according to this embodiment of the present invention consists in first causing the movable mould 13 to advance so that the bearing pawl 17 is housed within the bearing pawl receiver 18 to combine the stationary mould 12 with the movable mould 13. Then, resin melted by an injection moulding machine is caused to flow into the space formed by the cavities 12a and 13a, through an injection tube 14, at a set pressure for injection moulding the disc substrate.

As resin material, for example, polycarbonate, acryl and the like having translucence can be used.

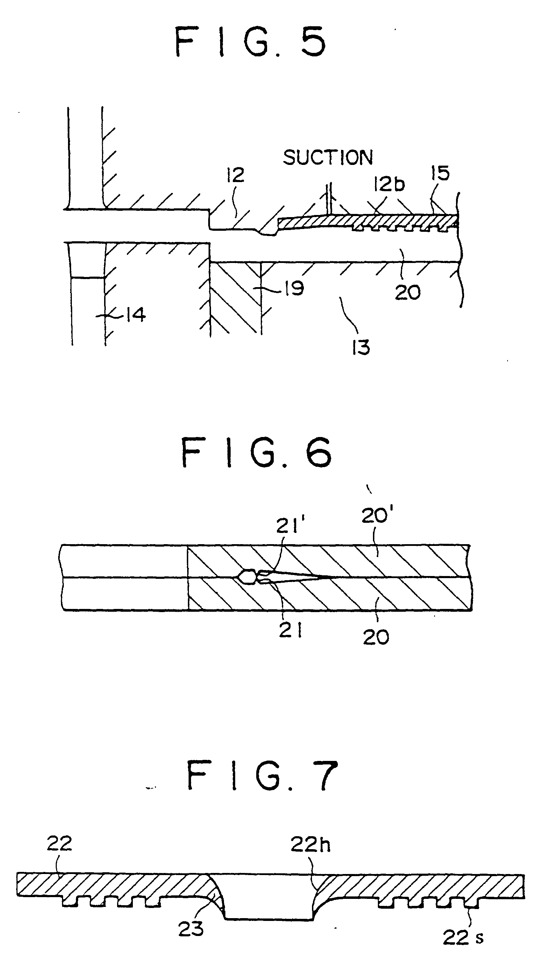

Then, the stamper 15 is plastically deformed by the injection pressure during disc moulding, as shown in Fig. 5, to be moulded into a shape conforming to the stamper supporting surface 12b.

More specifically, the stamper 15 is shaped, at least during the moulding process, such that the inner peripheral portion protrudes inwardly in the disc thickness direction from the data recording surface in parallel to the stamper supporting surface 12b. Accordingly, when the stamper 15 is pressed against one surface of the disc substrate 20 by the injection pressure, a data recording surface is formed on the disc substrate 20, and the inner peripheral portion thereof will be dented inwardly in the disc thickness direction with respect to the data recording surface.

After the disc substrate 20 is solidified and cooled, the movable mould 13 is caused to retreat to open the mould, and the extrusion member 19 is caused to protrude into the cavity 13a to take out the disc substrate 20.

When this disc substrate 20 is released from the stamper 15, a burr 21 occurs on the inside diameter side of the disc substrate 20, but in this embodiment, the flatness of the reference plane is not deteriorated because the data recording surface is moulded higher than this burr 21.

Accordingly, as shown in Fig. 6, the burrs 21 and 21' are positioned lower than the laminated reference plane even if the disc substrates 20 and 20' themselves are pasted together, and therefore, the pasting can be made satisfactorily.

Preferentially, the inner peripheral portion of the stamper-supporting surface (12b) is according to claim 2.

Next, other embodiments according to the present invention will be described in conjunction with Figs. 7 to 9.

In a second embodiment, as shown in its schematic sectional view in Fig. 7, a burr 23 occurring when the centre hole 22h of a stamper 22 for injection moulding is being punched is ensured to be formed on the side of the same plane as a surface on which fine irregularities 22s for transfer have been formed.

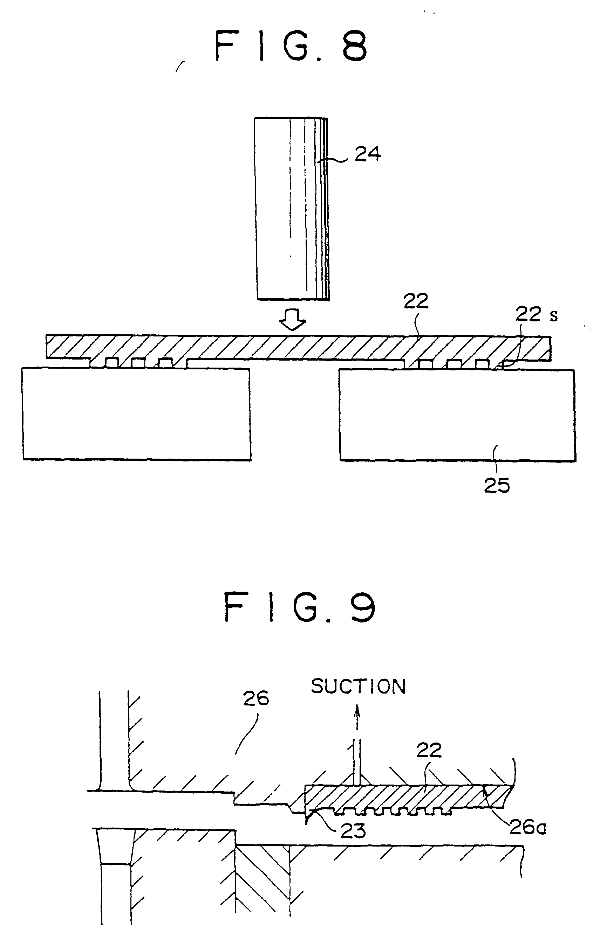

Fig. 8 shows how to punch the centre hole 22h of the stamper 22.

First, the stamper 22 on which the fine irregularities 22s for transfer have been formed is placed on a stamper installation base 25.

Next, punching is made by a stamper centre hole puncher 24 from the side opposite to the surface on which the fine irregularities 22s for transfer have been formed to form the centre hole 22h of the stamper.

At this time, the air cylinder pressure used for the stamper centre hole puncher 24 is set to, for example, 2 to 3 kg/cm², or preferably 2.5 kg/cm², and the knockout spring force is set to, for example, 120 to 150 kg, or preferably 140 kg.

Since the centre hole 22h has been punched, as shown in Fig. 7, in the stamper 22 from the side opposite to the surface on which the fine irregularities 22s for transfer have been formed, a burr 23 occurs at the periphery of the centre hole 22h on the same side as the surface on which the fine irregularities 22s have been formed.

The stamper 22 thus formed is mounted to the optical disc moulding device as shown in Fig. 9.

In Fig. 9, the stamper supporting surface 26a of the stationary mould 26 in the optical disc moulding device is flat. Since, however, a burr 23 protrudes inwardly in the disc thickness direction from the data recording surface of the stamper 22, the disc substrate moulded thereby will be dented inwardly in the disc thickness direction at its inner periphery, with respect to the data recording surface.

Therefore, pasting can be made satisfactorily because the data recording surface is moulded higher than a burr even if the burr may occur at the inner periphery of the disc substrate thus moulded.

Therefore, according to the present invention, a burr 21 is positioned lower than the laminated reference plane even if the burr 21 may occur at the inner periphery of the disc substrate 20 when the disc substrate 20 is released from the stamper 15 after injection moulding, and therefore the flatness of the reference plane is not deteriorated.

Also, it is easy to control the inside diameter, shape and the like of the stamper 15 and the lip of the mould, and post-machining to remove the burr from the disc substrate is not required.

In addition, since the centre hole in the stamper 15 does not require any excessive precision, it becomes easy to control the lip of the mould, and operating efficiency and the like can be improved. Further, since it is not necessary to remove the burr 21, post-machining to remove the burr 21 is not required, thus making it possible to reduce the cost of production and to improve the yield and operating efficiency.

As described above, according to the present invention, it is possible to provide an optical disc moulding device capable of preventing the flatness of the laminated reference plane from being deteriorated, rendering it easy to control the lip of the mould and necessitating no post-machining to remove burrs from the disc substrate, and to provide a moulding method for an optical disc using the optical disc moulding device.

## Claims

1. An optical disc moulding device comprising:
a pair of moulds (12, 13) for injection moulding a disc substrate within a cavity; and
a stamper (15) of annular form supported within the cavity of at least one mould, having a data recording surface consisting of fine irregularities for transferring recording information onto a disc, a stamper-supporting surface (12b) within the cavity of said mould, characterized in that a portion of said stamper-supporting surface, with which the inner peripheral portion of the stamper (15) is brought into contact, protrudes inwardly in the disc thickness direction, so that the inner peripheral portion of said stamper protrudes, at least during the moulding process, inwardly in the disc thickness direction from the data recording surface in parallel to the stamper-supporting surface (12b).

2. An optical disc moulding device according to claim 1, wherein the inner peripheral portion of said stamper-supporting surface (12b) which protrudes inwardly in the disc thickness direction is a tapered section.

3. An optical disc moulding device according to claim 1, wherein said stamper (15) has been moulded into a shape conforming to that of said stamper-supporting surface (12b) in advance.

4. An optical disc moulding device according to claim 2, wherein said stamper (15) is deformed into a shape conforming to that of said stamper-supporting surface (12b) by injection pressure during disc moulding.

5. An optical disc moulding device comprising:
a pair of moulds for injection moulding a disc substrate within a cavity; and
a stamper (22) of annular form supported within the cavity of at least one mould (26), having a data recording surface consisting of fine irregularities (22s) for transferring recording information onto a disc, characterized in that
a portion (23) at the inner periphery of said stamper protrudes inwardly in the disc thickness direction from said data recording surface.

6. An optical disc moulding device according to claim 5, wherein said stamper (22) is formed by punching the centre hole from the side of the stamper opposite to the surface on which said data recording surface has been formed.

7. A disc moulding method comprising the steps of:
mounting a stamper (15/22) of annular form, having a data recording surface consisting of fine irregularities for transferring recording information onto a disc, within the cavity of at least one mould, of a pair of moulds, for injection moulding a disc substrate within said cavity; and
injection moulding the disc substrate,
characterized in that the inner peripheral portion of the stamper (15/22) is caused to protrude inwardly in the disc thickness direction from the data recording surface of said stamper by injection pressure during disc moulding.

## Patentansprüche

1. Gießvorrichtung für optische Platten, die umfasst:
ein Paar von Formen (12, 13) zum Spritzgießen eines Plattensubstrats innerhalb eines Hohlraums und
einen innerhalb des Hohlraums von zumindest einer Form gehaltenen ringförmigen Stempel (15), der eine Datenaufzeichnungsoberfläche hat, die aus feinen Unregelmäßigkeiten zum Übertragen von Aufzeichnungsinformation auf eine Platte besteht, wobei sich innerhalb des Hohlraums der Form eine Stempelhalteoberfläche (12b) befindet,
dadurch **gekennzeichnet**, dass
ein Teil der Stempelhalteoberfläche, mit welcher der innere Umfangsteil des Stempels (15) in Berührung gebracht wird, einwärts in der Plattendickenrichtung vorspringt, so dass der innere Umfangsteil des Stempels zumindest während des Gießvorgangs einwärts in der Plattendickenrichtung von der Datenaufzeichnungsoberfläche parallel zu der Stempelhalteoberfläche (12b) vorspringt.

2. Gießvorrichtung für optische Platten nach Anspruch 1, wobei der innere Umfangsteil der Stempelhalteoberfläche (12b), der einwärts in der Plattendickenrichtung vorspringt, ein verjüngter Abschnitt ist.

3. Gießvorrichtung für optische Platten nach Anspruch 1, wobei der Stempel (15) vorab in eine Form gegossen worden ist, die sich nach derjenigen der Stempelhalteoberfläche (12b) richtet.

4. Gießvorrichtung für optische Platten nach Anspruch 2, wobei der Stempel (15) durch den Einspritzdruck während des Plattengießens in eine Form verformt wird, die sich nach der Stempelhalteoberfläche (12b) richtet.

5. Gießvorrichtung für optische Platten, die umfasst:
ein Paar von Formen zum Spritzgießen eines Plattensubstrats innerhalb eines Hohlraums und
einen innerhalb des Hohlraums von zumindest einer Form (26) gehaltenen ringförmigen Stempel (22), der eine Datenaufzeichnungsoberfläche hat, die aus feinen Unregelmäßigkeiten (22s) zum Übertragen von Aufzeichnungsinformation auf eine Platte besteht,
dadurch **gekennzeichnet**, dass
ein Teil (23) bei dem inneren Umfang des Stempels einwärts in der Plattendickenrichtung von der Datenaufzeichnungsoberfläche vorspringt.

6. Gießvorrichtung für optische Platten nach Anspruch 5, wobei der Stempel (22) durch Stanzen des Zentrallochs von der Seite des Stempels her gebildet wird, die der Oberfläche gegenüberliegt, auf welcher die Datenaufzeichnungsoberfläche gebildet worden ist.

7. Plattengießverfahren, das Schritte umfasst zum
Montieren eines Stempels (15/22) einer Ringform, der eine Datenaufzeichnungsoberfläche hat, die aus feinen Unregelmäßigkeiten zum Übertragen von Aufzeichnungsinformation auf eine Platte besteht, innerhalb des Hohlraums von zumindest einer Form eines Paares von Formen zum Spritzgießen eines Plattensubstrats innerhalb des Hohlraums und
Spritzgießen des Plattensubstrats,
dadurch **gekennzeichnet**, dass
der innere Umfangsteil des Stempels (15, 22) durch den Einspritzdruck während des Plattengießens veranlasst wird, einwärts in der Plattendickenrichtung von der Datenaufzeichnungsoberfläche des Stempels vorzuspringen.

## Revendications

1. Dispositif de moulage de disque optique comprenant :
- une paire de moules (12, 13) servant à mouler par injection un substrat de disque à l'intérieur d'une cavité ; et
- une matrice de pressage (15) de forme annulaire soutenue à l'intérieur de la cavité d'au moins un moule, ayant une surface d'enregistrement de données qui consiste en de fines irrégularités servant au transfert de l'information d'enregistrement sur un disque, une surface (12b) de support de matrice de pressage se trouvant à l'intérieur de la cavité dudit moule, caractérisé en ce qu'une partie de ladite surface de support de matrice de pressage, avec laquelle la partie périphérique interne de la matrice de pressage (15) est mise en contact, fait saillie vers l'intérieur suivant la direction de l'épaisseur du disque, si bien que la partie périphérique interne de ladite matrice de pressage fait saillie, au moins pendant le processus de moulage, vers l'intérieur dans la direction d'épaisseur du disque, par rapport à la surface d'enregistrement de données, en parallèle avec la surface (12b) de support de matrice de pressage.

2. Dispositif de moulage de disque optique selon la revendication 1, où la partie périphérique interne de ladite surface (12b) de support de matrice de pressage qui fait saillie vers l'intérieur dans la direction de l'épaisseur du disque est une section qui va en s'amincissant.

3. Dispositif de moulage de disque optique selon la revendication 1, où ladite matrice de pressage (15) a été préalablement moulée suivant une forme adaptée à celle de ladite surface (12b) de support de matrice de pressage.

4. Dispositif de moulage de disque optique selon la revendication 2, où ladite matrice de pressage (15) est déformée suivant une forme adaptée à celle de ladite surface (12b) de support de matrice de pressage par la pression d'injection pendant le moulage du disque.

5. Dispositif de moulage de disque optique comprenant :
- une paire de moules destinés à mouler par injection un substrat de disque à l'intérieur d'une cavité ; et
- une matrice de pressage (22) de forme annulaire soutenue à l'intérieur de la cavité d'au moins un moule (26), possédant une surface d'enregistrement de données qui consiste en de fines irrégularités (22s) servant au transfert de l'information d'enregistrement sur un disque,
caractérisé en ce qu'une partie (23) située au niveau de la périphérie interne de ladite matrice de pressage fait saillie vers l'intérieur dans la direction d'épaisseur du disque, par rapport à ladite surface d'enregistrement de données.

6. Dispositif de moulage de disque optique selon la revendication 5, où ladite matrice de pressage (22) est formée par poinçonnage du trou central depuis le côté de la matrice de pressage qui est opposé à la surface sur laquelle ladite surface d'enregistrement de données a été formée.

7. Procédé de moulage de disque comprenant les opérations suivantes :
- mouler une matrice de pressage (15/22) de forme annulaire, possédant une surface d'enregistrement de données qui consiste en de fines irrégularités servant au transfert de l'information d'enregistrement sur un disque, à l'intérieur de la cavité d'au moins un moule d'une paire de moules, en vue du moulage par injection d'un substrat de disque à l'intérieur de ladite cavité ; et
- mouler par injection le substrat de disque,
caractérisé en ce que la partie périphérique interne de la matrice de pressage (15/22) est amenée à faire saillie vers l'intérieur dans la direction d'épaisseur du disque par rapport à la surface d'enregistrement de données de ladite matrice de pressage par la pression d'injection pendant le moulage du disque.
